# EUROPÄISCHE PATENTSCHRIFT

(11) **EP 2 330 061 B1**
(45) Veröffentlichungstag und Bekanntmachung des Hinweises auf die Patenterteilung: **18.07.2012**
(21) Anmeldenummer: 10015165.3
(22) Anmeldetag: 01.12.2010
(51) Int. Cl.: B65G 19/10, B65G 19/14

(54) **Zugmitteltrieb**
Traction mechanism drive
Transmission à moyen de traction

(30) Priorität: 01.12.2009 DE 102009056577
(43) Veröffentlichungstag der Anmeldung: 08.06.2011
(73) Patentinhaber: GF-Filtertechnik GmbH, 72820 Sonnenbühl (DE)
(72) Erfinder: Früh, Fritz, 72820 Sonnenbühl (DE)
(74) Vertreter: Kohler Schmid Möbus

(56) Entgegenhaltungen:
- EP-A1- 0 392 580
- EP-B1- 0 089 362
- WO-A1-2005/035404
- DE-C1- 19 511 931
- GB-A- 1 576 275
- GB-A- 2 224 254
- US-A- 3 754 636

## Beschreibung

Die Erfindung betrifft einen Zugmitteltrieb mit wenigstens einem Zahnrad für einen Einsatz in abrasiver Umgebung.

Derartige Zugmitteltriebe (z.B. GB 1 576 275, EP 392 580) werden beispielsweise in den Bereichen der Landwirtschaft, der chemischen Industrie sowie der Bauindustrie, aber auch bei der Werkstückbearbeitung für den Betrieb von Kratzerförderern eingesetzt, mit denen jeweilig anfallendes Fördergut, insbesondere aggressive Medien wie Sand, Korund oder Scheuermittel, in Richtung auf einen Abwurf oder dergleichen befördert wird.

Gleichwohl die in der Praxis eingesetzten Zugmitteltriebe aus hochfestem Stahl, wie etwa einem Einsatz- oder Vergütungsstahl gefertigt sind, erfordern diese aufgrund der abrasiven Wirkung des Förderguts und dadurch häufig schwergängiger bzw. durch das Fördergut selbst blockierter Kettenglieder einen hohen Wartungsaufwand und weisen verschleißbedingt insgesamt nur kurze Standzeiten auf, was unter Kostengesichtspunkten ungünstig ist.

Aufgabe der Erfindung ist es, einen gattungsgemäßen Zugmitteltrieb anzugeben, der insbesondere bei einem Einsatz in abrasiver Umgebung eine verbesserte Standzeit sowie einen geringeren Wartungsaufwand bei zugleich hohem Lastaufnahmevermögen aufweist.

Es ist zudem Aufgabe der Erfindung, einen Kratzförderer mit einem Zugmitteltrieb mit einem Zahnrad anzugeben, der eine insgesamt verbesserte Standzeit aufweist.

### Vorteile der Erfindung

Die den Zugmitteltrieb betreffende Aufgabe wird erfindungsgemäß durch einen Zugmitteltrieb mit den in Anspruch 1 angegebenen Merkmalen gelöst.

Die den Kratzförderer betreffende Aufgabe wird erfindungsgemäß durch einen Kratzförderer mit den in Anspruch 7 angegebenen Merkmalen gelöst.

Der Zugmitteltrieb weist erfindungsgemäß zwei seilförmige Zugelemente, die mittels Mitnehmerelementen jeweils in einem festem Abstand miteinander verbunden sind, auf. An den Zugelementen sind eine Vielzahl von daran befestigten zylindrischen Mitnehmerelementen vorgesehen, die längs der Zugelemente zueinander beabstandet hintereinander angeordnet sind. Die Mitnehmerelemente sind an den Zugelementen jeweils mittels zumindest eines Sicherungselements, einer Madenschraube, gegenüber einer Relativbewegung zu dem Zugelement gesichert, wobei die Mitnehmerelemente an ihrer Mantelfläche von Zähnen des Zahnrads umgriffen werden können. Das Zahnrad ist dabei schmäler als die axiale Länge der Mitnehmerelemente, sodass das Zahnrad zwischen die Zugelemente eingreifen und mit seinen Zähnen die Mitnehmerelemente umgreifen kann. Die Mitnehmerelemente sind durch Führung der Zugelemente an Flanken des Zahnrads zuverlässig gegenüber einem Abrutschen von dem Zahnrad gesichert. Diese Bauform ermöglicht eine hohe Widerstandsfähigkeit des Zugmitteltriebs gegenüber der abrasiven Wirkung des Förderguts, wobei die Gefahr eines Blockierens von gegeneinander bewegbaren Kettengliedern vollständig entfällt. Der Zugmitteltrieb ist zudem aufgrund seines denkbar einfachen Aufbaus kostengünstig zu fertigen, wobei insbesondere auch ein Austausch einzelner Komponenten, etwa aufgrund Verschleißes, mit nur geringem Aufwand möglich ist. Konstruktionsbedingt kann der Zugmitteltrieb zudem je nach Auslegung der einzelnen Komponenten hohe Zugkräfte aufnehmen, was für die mögliche Einsatzbreite des Zugmitteltriebs günstig ist.

Nach einer Weiterbildung der Erfindung ist der Zugmitteltrieb um wenigstens ein weiteres, vorzugsweise als Zahnrad ausgebildetes, Führungsrad geführt, wobei die Zugelemente vorzugsweise endlos zusammenhängend sind. Dadurch kann der Zugmitteltrieb sowohl für oszillierende Bewegungsabläufe als auch im Umlaufbetrieb eingesetzt werden.

Damit die Mitnehmerelemente im Hinblick auf ein schlupffreies und damit effektives und verschleißarmes Zusammenwirken (z. B. Kraftübertragung) mit dem Zahnrad auf einfache und zuverlässige Weise gegenüber den Zugelementen ausgerichtet bzw. angeordnet werden können, weisen die Mitnehmerelemente als Nuten oder Bohrungen ausgeführte Ausnehmungen auf, die sich quer zur Längsachse des Mitnehmerelements erstrecken und durch die die Zugelemente hindurchgeführt sind.

Zwecks einer möglichst dauerhaften aber dennoch lösbaren und zugleich hoch belastbaren Befestigung der Mitnehmerelemente an den Zugelementen sind die Sicherungselemente vorzugsweise zum kraftschlüssigen Festsetzen des jeweiligen Zugelements, vorzugsweise in einer Ausnehmung des Mitnehmerelements, vorgesehen. Ein besonders einfacher und kostengünstiger Aufbau wird dabei dadurch erreicht, dass die Sicherungselemente als am Markt frei verfügbare so genannte Madenschrauben ausgebildet sind. Die Mitnehmerelemente können hierzu beispielsweise stirnseitige oder im Bereich ihrer Mantelflächen eingebrachte Bohrungen aufweisen, die einenends in die Ausnehmung münden und die vorzugsweise mit einem Innengewinde versehen sind. Die Madenschrauben können dadurch derart in die Bohrung eingeschraubt sein, dass das Zugelement beispielsweise zwischen einem Schaftende der Madenschraube und einer Nutflanke bzw. einem Nutboden der Nut oder der Wandung der Bohrung festgeklemmt ist. Die Madenschrauben (Sicherungselemente) weisen dabei vorzugsweise einen in der korrespondierenden Bohrung versenkten Kopf mit Werkzeugeingriff auf, der auf diese Weise vor der zerstörerischen Wirkung des Förderguts gut geschützt ist.

Die Langlebigkeit bzw. Belastbarkeit des Zugmitteltriebs kann nach der Erfindung dadurch weiter erhöht werden, dass die Mitnehmerelemente einstückig und/oder massiv ausgebildete Bolzen und/oder Stifte sind.

Eine nach einem alternativen Ausführungsbeispiel der Erfindung im Wesentlichen koaxial zu den Mitnehmern angeordnete Hülse, die die Mitnehmerelemente wenigstens im Bereich ihrer Kontaktflächen mit dem Zahnrad umgreift und die aus einem gegenüber Verschleiß hoch widerstandsfähigem, z. B. keramischen Material, gefertigt ist, kann die Langlebigkeit des Zugmitteltriebs weiter optimiert werden.

An den Zugelementen und/oder an wenigstens einem Mitnehmerelement kann nach der Erfindung vorzugsweise ein Kratzer, Schaber und/oder dergleichen ankoppelbar sein. In Abhängigkeit von deren Auslegung können dadurch unterschiedlichste Fördergüter auf einfache Weise bewegt bzw. transportiert werden.

Die Zugelemente sind vorzugsweise als geflochtene oder als geschlagene Seile mit rundem, eckigem oder auch andersartigem Querschnitt ausgeführt und weisen vorzugsweise eine nur geringe Dehnbarkeit bzw. Biegesteifigkeit auf.

Zwecks eines möglichst großen Einsatzspektrums des Zugmitteltriebs können das bzw. die Zugelemente, die Mitnehmerelemente, die Sicherungselemente und/oder das Zahnrad insbesondere aus einem gegenüber korrosiven bzw. aggressiven Stoffen unempfindlichen Material, vorzugsweise Stahl, einer anderen Metalllegierung, einem Kunststoff und/oder einem Verbundwerkstoff gefertigt sein.

Weitere Vorteile und vorteilhafte Ausgestaltungen des Gegenstands der Erfindung sind der Beschreibung, der Zeichnung und den Ansprüchen entnehmbar.

### Zeichnungen

Nachstehend wird die Erfindung anhand von in der Zeichnung dargestellten Ausführungsbeispielen näher erläutert.

In der Zeichnung zeigen:
- Fig. 1: eine stark schematisierte Draufsicht auf einen ausschnittsweise darge- stellten erfindungsgemäßen Zugmitteltrieb;
- Fig. 2: eine Seitenansicht des in der Fig. 1 dargestellten Zugmitteltriebs;
- Fig. 3: eine ausschnittsweise perspektivische Ansicht eines der Fig. 1 entspre- chenden Zugmitteltriebs ohne Zahnrad; und
- Fig. 4: einen Querschnitt eines Mitnehmerelements des in der Fig. 1 wieder- gegebenen Zugmitteltriebs.

### Beschreibung des Ausführungsbeispiels

In der Zeichnung sind einander entsprechende Bauteile zweckmäßigerweise mit gleichen Bezugszeichen versehen.

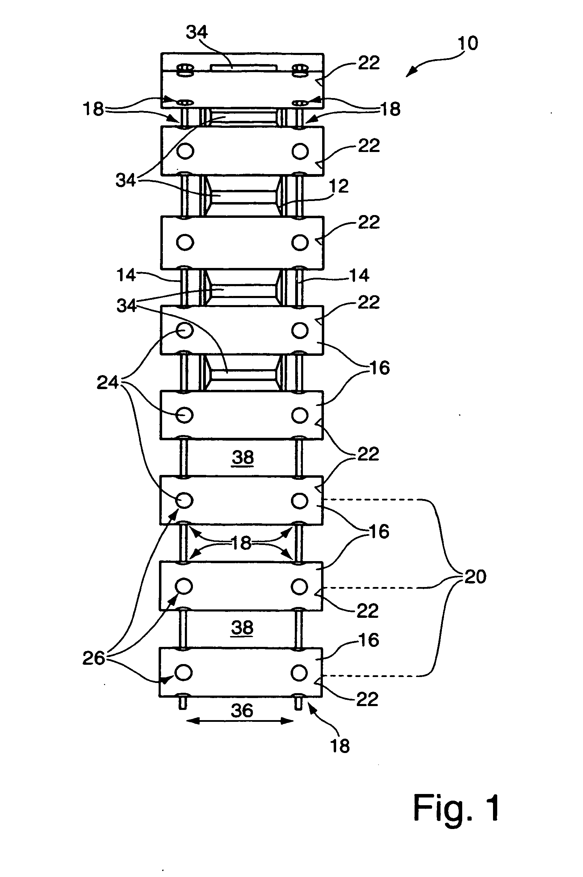

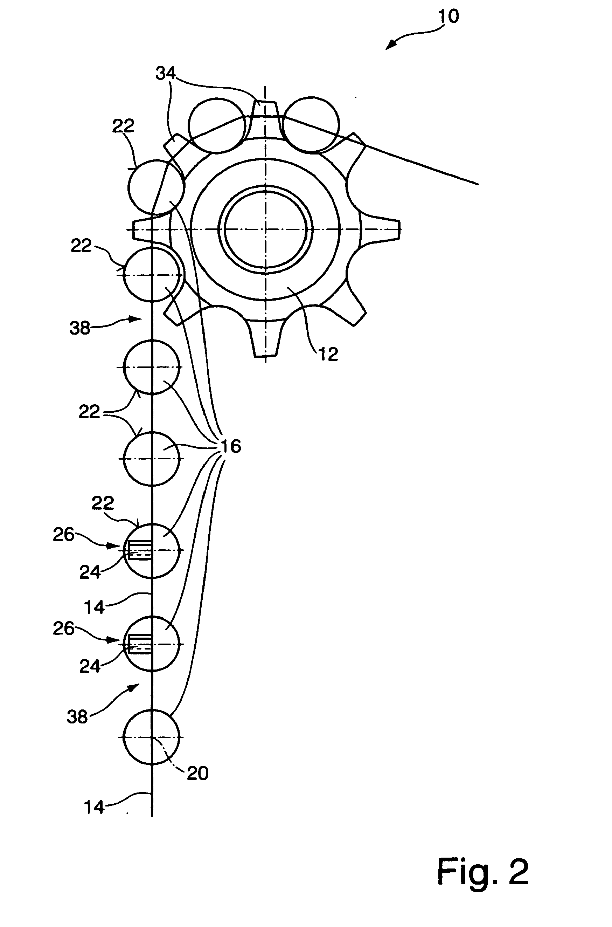

In den Fig. 1 und 2 ist ein insgesamt mit 10 bezeichneter erfindungsgemäßer Zugmitteltrieb mit einem Zahnrad 12 gezeigt, der insbesondere für einen Einsatz in einer abrasiven bzw. aggressiven Umgebung d. h. für einen Kontakt mit insbesondere harten und schleifenden Medien, wie etwa Metallspäne, Quarzsand, Gestein und/oder mit aggressiven bzw. ätzenden Medien wie beispielsweise Säuren, Laugen sowie anderen Chemikalien und dergleichen geeignet ist.

Der Zugmitteltrieb 10 weist zwei seilförmige und jeweils endlos zusammenhängend ausgeführte Zugelemente 14 auf, die vorliegend als Stahlseile ausgebildet sind, welche aus einem korrosions- und säurebeständigen Stahl gefertigt sind. Längs der Zugelemente 14 sind eine Vielzahl von zylindrischen Mitnehmerelementen 16 lösbar befestigt, die hintereinander und zueinander regelmäßig beabstandet angeordnet sind. Die Mitnehmerelemente 14 können gemäß eines in der Zeichnung nicht näher wiedergegebenen Ausführungsbeispiels jedoch auch in einem zueinander unregelmäßigem bzw. in einem periodisch wechselnden Abstand angeordnet sein.

Die Mitnehmerelemente 16 sind als massive Stahlbolzen ausgeführt und weisen jeweils zwei voneinander beabstandete erste Bohrungen 18 auf, die zueinander parallel angeordnet sind und die sich jeweils durch die Mitnehmerelemente 16 orthogonal zu deren Längsachse 20 erstrecken. Die ersten Bohrungen 18 stehen beidenends mit der äußeren Mantelfläche 22 des jeweiligen Mitnehmerelements in Verbindung, wobei jeweils eines der Zugelemente 14 durch die ersten Bohrungen 18 hindurchgeführt ist.

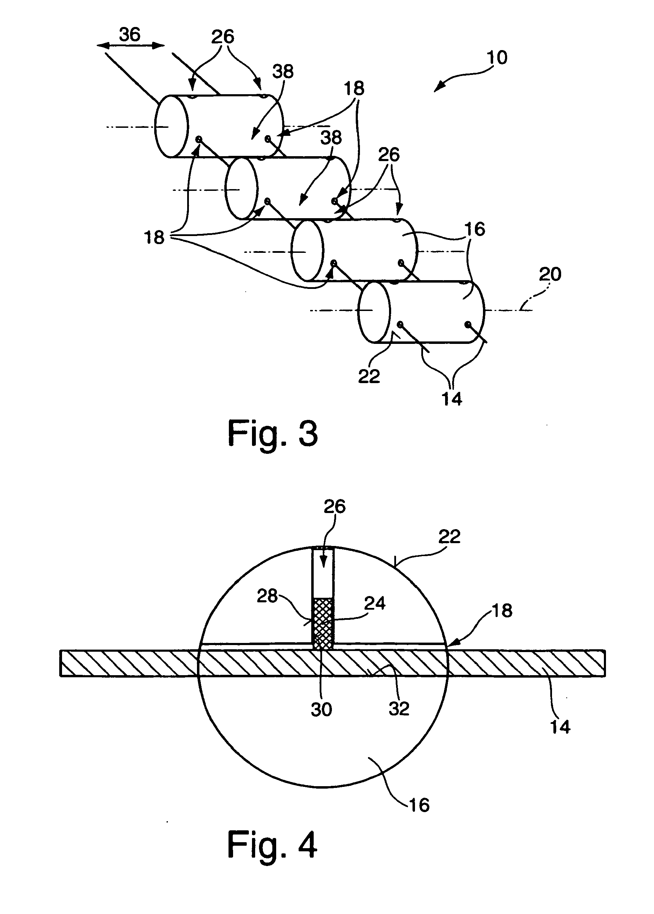

Die einzelnen Mitnehmerelemente 16 sind, wie aus dem in der Fig. 4 wiedergegebenen Querschnitt eines Mitnehmerelements 16 hervorgeht, jeweils mittels als Madenschrauben ausgebildeten Sicherungselementen 24 auf den Zugelementen 14 gegenüber einer Relativbewegung zu diesen verriegelt. Die Mitnehmerelemente 16 weisen hierzu jeweils den ersten Bohrungen 18 zugeordnete zweite Bohrungen 26 auf, die orthogonal zu den ersten Bohrungen 18 angeordnet sind. Die zweiten Bohrungen 26 münden einenends in die ersten Bohrungen 18 und stehen anderenends mit der Mantelfläche 22 des jeweiligen Mitnehmerelements 16 in Verbindung.

Das in der zweiten Bohrung 26 angeordnete Sicherungselement 24 weist jeweils ein Außengewinde 28 auf, das mit einem Innengewinde 30 der zweiten Bohrung im Eingriff steht. Das Sicherungselement 24 ist dabei derart in die zweite Bohrung 26 eingedreht, dass dieses stirnseitig kraftschlüssig an das jeweilige Zugelement 14 zur Anlage gebracht ist und dieses gegen die dem Sicherungselement 24 gegenüberliegende Wandung 32 der ersten Bohrung 18 presst.

Das Zahnrad 12 weist eine Vielzahl von umfangsseitig angeordneten Zähnen 34 auf, die schmäler sind als der Abstand 36 zwischen den jeweiligen zwei ersten Bohrungen 18 eines jeden Mitnehmerelements 16 bzw. der durch diese hindurchgeführten Zugelemente 14 (Fig. 1 und 2). Die Zähne 34 durchgreifen den von jeweils zwei hintereinander angeordneten Mitnehmerelementen 16 sowie der die Mitnehmerelemente 18 beidenends verbindenden Zugelemente 14 gebildeten Zwischenraum 38 und umgreifen das jeweilige Mitnehmerelement 16 zwecks Kraftübertragung. Die Zahnräder 12 und die Mitnehmerelemente 16 weisen jeweils eine aufeinander abgestimmte Umfangskontur auf, wobei die Mitnehmerelemente zueinander derart beabstandet sind, dass hintereinander angeordnete Mitnehmerelemente 16 von in Umfangsrichtung der Zahnräder 12 hintereinander angeordneten Zähnen 34 umfasst werden.

Der Zugmitteltrieb kann in ebenfalls nicht näher wiedergegebener Weise zwei oder mehrere Zahn- bzw. Führungsräder umschlingen und zusätzlich zumindest teilweise in Führungsschienen geführt sein, wodurch ein Durchhängen, insbesondere bei quer zur Längserstreckung des Zugmitteltriebs einwirkenden Kräften sowie ggf. eine Beschädigung des Zugmitteltriebs durch beispielsweise herunterfallendes Schüttgut vermieden werden kann.

An den Zugmitteltrieb 10 ist über wenigstens eines der Zugelemente 14 bzw. ein Mitnehmerelement 16 ein in der Zeichnung nicht näher wiedergegebener Kratzer ankoppelbar, mit dem beispielsweise ein zu beförderndes Fördergut entlang einer Förderrinne oder dergleichen beförderbar ist.

Die Erfindung betrifft einen Zugmitteltrieb 10 mit wenigstens einem Zahnrad 12 für einen Einsatz in abrasiver Umgebung. Der Zugmitteltrieb 10 weist erfindungsgemäß seilförmige Zugelemente 14 mit einer Vielzahl von daran befestigten zylindrischen Mitnehmerelementen 16, die längs der Zugelemente 14 zueinander beabstandet hintereinander angeordnet sind, auf, wobei die Mitnehmerelemente 16 an den Zugelementen jeweils mittels zumindest eines Sicherungselements 24, einer Madenschraube, gegenüber einer Relativbewegung zu den Zugelementen 14 gesichert sind. Die Mitnehmerelemente 16 werden an ihrer Mantelfläche 22 von einem Zahn 34 des Zahnrads 12 umgriffen. Der Zugmitteltrieb 10 weist zwei endlos zusammenhängende Zugelemente 14 auf, wobei an den Zugelementen 14 bzw. den Mitnehmerelementen 16 wenigstens ein Kratzer, Schaber oder dergleichen angeordnet ist.

## Patentansprüche

1. Zugmitteltrieb (10) mit wenigstens einem Zahnrad (12) für einen Einsatz in abrasiver Umgebung, **dadurch gekennzeichnet, dass** der Zugmitteltrieb (10) zwei seilförmige Zugelemente (14), die mittels Mitnehmerelementen (16) jeweils in einem festem Abstand (36) miteinander verbunden sind, aufweist, dass an den Zugelementen (14) eine Vielzahl von daran befestigten zylindrischen Mitnehmerelementen (16) vorgesehen sind, die längs der Zugelemente (14) zueinander beabstandet hintereinander angeordnet sind, wobei die Mitnehmerelemente (16) an den Zugelementen (14) jeweils mittels zumindest eines Sicherungselements (24) in Form einer Madenschraube, gegenüber einer Relativbewegung zu den Zugelementen (14) gesichert sind und wobei die Mitnehmerelemente (16) an ihrer Mantelfläche (22) von Zähnen (34) des Zahnrads (12) umgriffen werden, das schmäler als die axiale Länge der Mitnehmerelemente (16) ist, sodass es zwischen die Zug-elemente eingreift.

2. Zugmitteltrieb nach Anspruch 1, **dadurch gekennzeichnet, dass** der Zugmitteltrieb (10) um ein weiteres, vorzugsweise als Zahnrad (12) ausgebildetes Führungsrad geführt ist, wobei die Zugelemente (14) vorzugsweise jeweils endlos zusammenhängend sind.

3. Zugmitteltrieb nach Anspruch 1 oder 2, **dadurch gekennzeichnet, dass** die Mitnehmerelemente (16) jeweils als Nuten oder als Bohrungen (18) ausgeführte Ausnehmungen aufweisen, die sich quer zur Längsachse (20) des Mitnehmerelements (16) erstrecken und durch die die Zugelemente (14) hindurchgeführt sind.

4. Zugmitteltrieb nach Anspruch 3, **dadurch gekennzeichnet, dass** die Sicherungselemente (24) zum kraftschlüssigen Festsetzen des Zugelements (14) an dem jeweiligen Mitnehmerelement (16) vorgesehen sind.

5. Zugmitteltrieb nach einem der vorhergehenden Ansprüche, **dadurch gekennzeichnet, dass** die Mitnehmerelemente (16), vorzugsweise einstückig ausgebildete Bolzen und/oder Stifte sind.

6. Zugmitteltrieb nach einem der vorhergehenden Ansprüche, **dadurch gekennzeichnet, dass** an dem Zugelement (14) und/oder an wenigstens einem Mitnehmerelement (16) ein Kratzer, Schaber und/oder dergleichen ankoppelbar ist.

7. Kratzförderer, **dadurch gekennzeichnet, dass** der Kratzer wenigstens einen Zugmitteltrieb (10) nach einem der Ansprüche 1 bis 6 aufweist.

8. Kratzförderer nach Anspruch 7, **dadurch gekennzeichnet, dass** der Zugmitteltrieb (10) zumindest teilweise in Führungsschienen geführt ist.

## Claims

1. Flexible drive (10) comprising at least one gear wheel (12) for use in an abrasive environment, **characterised in that** the flexible drive (10) has two rope-type traction elements (14) connected together at a fixed distance (36) from one another by means of impeller elements (16) and that a plurality of cylindrical impeller elements (16) are provided on the traction elements (14), arranged one behind the other and at a distance from one another along the traction elements (14) and fastened thereto, the impeller elements (16) each being secured to the traction elements (14) by means of at least one securing element (24) in the form of a grub screw so as to prevent movement relative to the traction elements (14), the lateral surfaces (22) of the impeller elements (16) being embraced by teeth (34) of the gear wheel (12) and the gear wheel being narrower than the axial length of the impeller elements (16) so that it engages between the traction elements.

2. Flexible drive according to claim 1, **characterised in that** the flexible drive (10) is guided around another guide wheel, preferably designed as a gear wheel (12), the traction elements (14) preferably being endless.

3. Flexible drive according to claim 1 or claim 2, **characterised in that** the impeller elements (16) each have recesses in the form of grooves or bores (18) extending transversely to the longitudinal axis (20) of the impeller element (16) and traversing the traction elements (14).

4. Flexible drive according to claim 3, **characterised in that** the securing elements (24) are intended to fix the traction element (14) non-positively to the respective impeller element (16).

5. Flexible drive according to one of the preceding claims, **characterised in that** the impeller elements (16) are preferably bolts and/or pins formed in one piece.

6. Flexible drive according to one of the preceding claims, **characterised in that** a scraper, doctor blade and/or the like can be coupled to the traction element (14) and/or to at least one impeller element (16).

7. Scraper conveyor, **characterised in that** the scraper has at least one flexible drive (10) according to one of claims 1 to 6.

8. Scraper conveyor according to claim 7, **characterised in that** the flexible drive (10) is at least partly guided in guide rails.

## Revendications

1. Transmission à moyens de traction (10) avec au moins une roue dentée (12) pour une mise en oeuvre dans un environnement abrasif, **caractérisée en ce que** la transmission à moyens de traction (10) présente deux éléments de traction (14) en forme de câble, qui sont reliés l'un à l'autre au moyen d'éléments d'entraînement (16) respectivement à distance fixe (36), **en ce qu'**il est prévu sur les éléments de traction (14) une pluralité d'éléments d'entraînement cylindriques (16) qui y sont fixés et qui sont mutuellement distants l'un derrière l'autre le long des éléments de traction (14), dans laquelle les éléments d'entraînement (16) sont bloqués sur les éléments de traction respectivement au moyen d'au moins un élément de fixation (24) sous la forme d'une vis sans tête à l'encontre d'un mouvement relatif par rapport aux éléments de traction (14) et dans laquelle les éléments d'entraînement (16) sont enveloppés sur leur surface enveloppante (22) par des dents (34) de la roue dentée (12), qui est plus étroite que la longueur axiale des éléments d'entraînement (16), si bien qu'elle s'engage entre les éléments de traction.

2. Transmission à moyens de traction selon la revendication 1, **caractérisée en ce que** la transmission à moyens de traction (10) est guidée autour d'une autre roue de guidage, de préférence sous la forme d'une roue dentée (12), dans laquelle les éléments de traction (14) sont de préférence respectivement contigus sans fin.

3. Transmission à moyens de traction selon la revendication 1 ou 2, **caractérisée en ce que** les éléments d'entraînement (16) présentent des creux qui ont respectivement la forme de rainures ou de perçages (18), qui s'étendent transversalement à l'axe longitudinal (20) de l'élément d'entraînement (16) et à travers lesquels les éléments de traction (14) sont passés.

4. Transmission à moyens de traction selon la revendication 3, **caractérisée en ce que** les éléments de fixation (24) sont prévus pour fixer l'élément de traction (14) à force sur l'élément d'entraînement respectif (16).

5. Transmission à moyens de traction selon l'une quelconque des revendications précédentes, **caractérisée en ce que** les éléments d'entraînement (16) sont des goupilles et/ou des broches de préférences formées d'une seule pièce.

6. Transmission à moyens de traction selon l'une quelconque des revendications précédentes, **caractérisée en ce que**, sur l'élément de traction (14) et/ou sur au moins un élément d'entraînement (16), peut être couplé(e) une raclette, un racloir et/ou similaires.

7. Convoyeur à racloirs, **caractérisé en ce que** le racloir présente au moins une transmission à moyens de traction (10) selon l'une quelconque des revendications 1 à 6.

8. Convoyeur à racloirs selon la revendication 7, **caractérisé en ce que** la transmission à moyens de traction (10) est guidée eu moins en partie dans des rails de guidage.
